# EUROPEAN PATENT APPLICATION

(11) **EP 2 228 759 A1**
(43) Date of publication of application: **15.09.2010**
(21) Application number: 09155138.2
(22) Date of filing: 13.03.2009
(51) Int. Cl.: G06Q 10/00

(54) **Method and computing device for updating a calendar database storing event data associated with an event, using a waitlist**

(71) Applicant: RESEARCH IN MOTION LIMITED, Waterloo, Ontario N2L 3W8 (CA)
(72) Inventor: Hardy, Michael T., Waterloo Ontario N2L 5Z5 (CA); Jain, Rohit Rocky, Waterloo Ontario N2L 5Z5 (CA); Runstedler, Christopher James, Waterloo Ontario N2L 5Z5 (CA)
(74) Representative: MERH-IP Matias Erny Reichl Hoffmann

(57) **Abstract**

A method and computing device for updating a calendar database storing event data associated with an event are provided. The event data comprises identifiers of invitees to the event and a maximum number of attendees for the event. The computing device is in communication with the calendar database. Event request data is transmitted to respective invitee computing devices associated with the invitees, the event request data requesting respective responses from the invitee computing devices, each respective response comprising one of a positive response indicative that the event will be attended and a negative response indicative that the event will not be attended. Respective positive responses are received from at least a subset of the invitee computing devices. The event data is updated, based on the positive responses, to maintain a first list of identifiers of attendees. If a number of attendees equals the maximum number, and at least one subsequent positive response is received, then: the event data is updated, based on the at least one subsequent positive response, to maintain a second list of identifiers of waitlistcd invitees for the event; and a waiting-list notification is transmitted, to each one of the invitee computing devices associated with the second list, the waiting list notification indicative that an invitee associated with one of the invitee computing devices associated with the second list is on a waiting list.

## Description

The specification relates generally to databases, and specifically to a method and computing device for updating a calendar database storing event data associated with an event, using a waitlist.

In some instances, when updating a calendar database with event data, such event data can be representative of a meeting or event that can only support a certain number of attendees. For example, a meeting can be scheduled in a meeting room that can only hold a certain number of attendees. Alternatively, an event such as a poker game may only be suitable for a given number of attendees. On the other hand, if event requests are transmitted to computing devices associated with more invitees than the event can support, than there is a risk that more attendees than can be supported will positively respond. This is a general waste of computing resources at both the originating computing device, as then cancellation notices will have to be transmitted, as well as a general waste of computing resources at the responding computing devices as both the original event request and the cancellation notice are processed. There is a further risk that the calendar database will be accessed and updated inefficiently in order to process the cancellations and/or the calendar database will be updated incorrectly. Furthermore, display drivers for a display device (displaying information related to the event) will need to updated repeatedly if each of the cancellations are formulated "manually" (e.g. via input received from an input device) leading to further inefficient use of computing resources.

While this can be addressed by transmitting event requests to a restricted set of computing devices associated with invitees, there is a risk of having too few positive respondents to make the meeting/event worthwhile.

### GENERAL

A first aspect of the specification may provide a method for updating a calendar database storing event data associated with an event, the event data comprising identifiers of invitees to the event and a maximum number of attendees for the event, the method implementable in a computing device in communication with the calendar database. The method may comprise transmitting, to respective invitee computing devices associated with the invitees, event request data requesting respective responses from the invitee computing devices, each respective response comprising one of a positive response indicative that the event will be attended and a negative response indicative that the event will not be attended. The method may further comprise receiving, from at least a subset of the invitee computing devices, respective positive responses. The method may further comprise updating the event data, based on the positive responses, to maintain a first list of identifiers of attendees. The method may further comprise: if a number of attendees equals the maximum number, and at least one subsequent positive response is received, then: updating the event data, based on the at least one subsequent positive response, to maintain a second list of identifiers of waitlisted invitees for the event; and transmitting, to each one of the invitee computing devices associated with the second list, a waiting-list notification indicative that an invitee associated with the one of the invitee computing devices associated with the second list is on a waiting list.

The method can further comprise, if the second list comprises at least one identifier, and if a subsequent negative response is received from at least one of the invitee computing devices associated with the first list, then: updating the first list by removing a respective identifier of each of the at least one of the invitee computing devices associated with the first list; transmitting, to at least one of the invitee computing devices associated with the second list, subsequent event request data inviting a further response; receiving, from one of the at least one of the invitee computing devices associated with the second list, a further positive response; and updating the event data, based on the further positive response, by moving an identifier of the one of the at least one of the invitee computing devices associated with the second list from the second list to the first list, whereby the number of attendees is maintained at less than or equal to the maximum number. An order in which the subsequent event request data is transmitted can be based on an order of waitlisted invitees associated with the second list. The order of waitlisted invitees can be based on at least one of: when respective subsequent positive responses were received from the invitee computing devices associated with respective waitlisted invitees; and respective priorities of the waitlisted invitees.

The event data can comprise identifiers of key invitees and a minimum number of key invitees. The method can further comprise, if, at a predetermined time, a number of key invitees on the first list is less than the minimum number of key invitees, transmitting, to the invitee computing devices, subsequent event request data for rescheduling the event. A minimum number of spaces on the first list can be reserved for the key invitees. The method can further comprise, if a number of attendees, on the first list, other than key invitees equals a difference between the maximum number and the minimum number, and if a subsequent positive response is received from an invitee computing device associated with an additional invitee other than a key invitee, then: updating the event data by adding an identifier of the additional invitee to the second list; and transmitting, to the invitee computing device associated with the additional invitee, a waiting-list notification indicative that the additional invitee is on the waiting list.

The event data can further comprise a minimum number of attendees for the event. The method can further comprise, if, at a predetermined time, a number of accepted attendees is less than the minimum number of attendees, transmitting, to the invitee computing devices, subsequent event request data for rescheduling the event.

The number of attendees can be determined by at least one of processing the first list and maintaining a counter of the number of attendees.

A second aspect of the specification can comprise a computing device for updating a calendar database storing event data associated with an event, the event data comprising a maximum number of attendees for the event. The computing device may comprise a communication interface enabled to communicate with respective invitee computing devices associated with the invitees to the event, via a communication network. The computing device may further comprise a memory device enabled to store the calendar database. The computing device may further comprise a processing unit in communication with the communication interface and the memory device. The processing unit may be enabled to transmit, to the respective invitee computing, event request data requesting respective responses from the invitee computing devices, each the respective response comprising one of a positive response indicative that the event will be attended and a negative response indicative that the event will not be attended. The processing unit may be further enabled to receive, from at least a subset of the invitee computing devices, respective positive responses. The processing unit may be further enabled to update the event data, based on the positive responses, to maintain a first list of identifiers of attendees. The processing unit may be further enabled to, if a number of attendees equals the maximum number, and at least one subsequent positive response is received, then: update the event data, based on the at least one subsequent positive response, to maintain a second list of identifiers of waitlisted invitees for the event; and transmit, to each one of the invitee computing devices associated with the second list, a waiting-list notification indicative that an invitee associated with the one of the invitee computing devices associated with the second list is on a waiting list.

The processing unit can be further enabled to: receive, from one of the invitee computing devices associated with the first list, a subsequent negative response indicative that the event will not be attended, the second list comprising at least one identifier; update the first list by removing a respective identifier of each of the at least one of the invitee computing devices associated with the first list; transmit, to at least one of the invitee computing devices associated with the second list, subsequent event request data inviting a further response; receive, from one of the at least one of the invitee computing devices associated with the second list, a further positive response; and update the event data, based on the further positive response, by moving an identifier of the one of the at least one of the invitee computing devices associated with the second list from the second list to the first list, whereby the number of attendees is maintained at less than or equal to the maximum number. An order in which the subsequent event request data is transmitted can be based on an order of waitlisted invitees associated with the second list. The order of waitlisted invitees can be based on at least one of: when respective subsequent positive responses were received from the invitee computing devices associated with respective waitlisted invitees; and respective priorities of the waitlisted invitees.

The event data can comprise identifiers of key attendees and a minimum number of key attendees, and the processing unit can be further enabled to, if, at a predetermined time, a number of key invitees on the first list is less than the minimum number of key invitees, transmit, to the invitee computing devices, subsequent event request data for rescheduling the event. The processing unit can be further enabled to: reserve a minimum number of spaces on the first list for the key attendees such that when a number of attendees, on the first list, other than key invitees equals a difference between the maximum number and the minimum number, and if a subsequent positive response is received from an invitee computing device associated with an additional invitee other than a key invitee, then the event data is updated by adding an identifier of the additional invitee to the second list and a waiting-list notification is transmitted to the invitee computing device associated with the additional invitee, the waiting-list notification indicative that the additional invitee is on the waiting list.

The event data can further comprise a minimum number of attendees for the event, and the processing unit can be further enable to, if, at a predetermined time, a number of accepted attendees is less than the minimum number of attendees, transmit, to the invitee computing devices, subsequent event request data for rescheduling the event.

The number of attendees can be determined by at least one of processing the first list and maintaining a counter of the number of attendees.

A third aspect of the specification may provide a computer-readable medium for storing computer-readable code embodied therein, the computer-readable code being executable by a processor of a computing device for causing the computing device to update a calendar database storing event data associated with an event, the event data comprising identifiers of invitees to the event and a maximum number of attendees for the event, the updating comprising: transmitting, to respective invitee computing devices associated with the invitees, event request data requesting respective responses from the invitee computing devices, each the respective response comprising one of a positive response indicative that the event will be attended and a negative response indicative that the event will not be attended; receiving, from at least a subset of the invitee computing devices, respective positive responses; updating the event data, based on the positive responses, to maintain a first list of identifiers of attendees; and if a number of attendees equals the maximum number, and at least one subsequent positive response is received, then: updating the event data, based on the at least one subsequent positive response, to maintain a second list of identifiers of waitlisted invitees for the event; and transmitting, to each one of the invitee computing devices associated with the second list, a waiting-list notification indicative that an invitee associated with the one of the invitee computing devices associated with the second list is on a waiting list.

### BRIEF DESCRIPTIONS OF THE DRAWINGS

Embodiments are described with reference to the following figures, in which:

Fig. 1 depicts a system for updating a calendar database storing event data associated with an event, according to non-limiting embodiments;

Fig. 2 depicts a method for updating a calendar database storing event data associated with an event, according to non-limiting embodiments; and

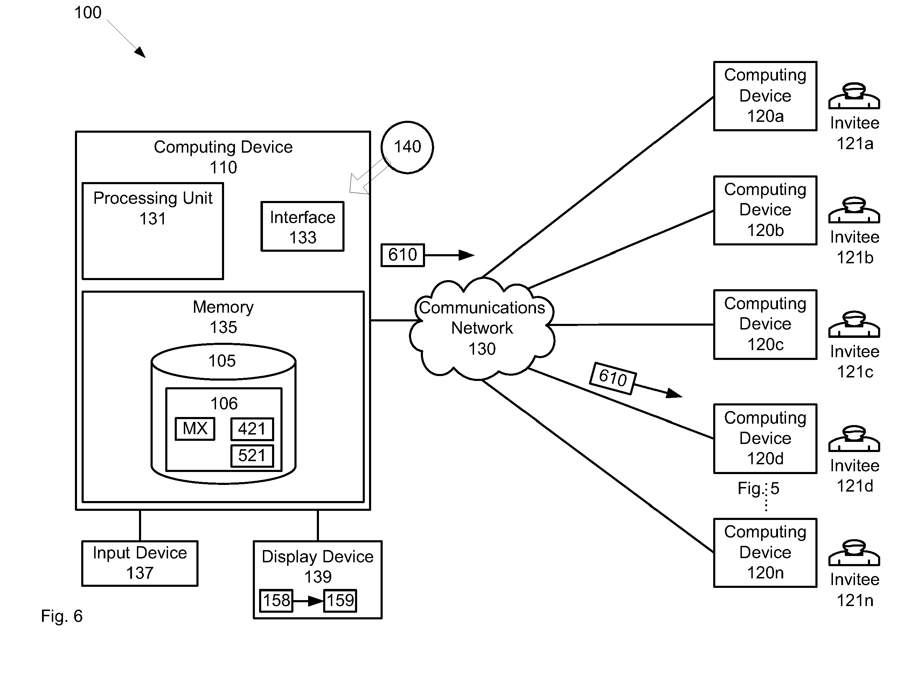

Figs. 3-8 depict the system of Figure 1 in various modes of operation to update the calendar database, according to non-limiting embodiments.

### DESCRIPTION OF PREFERRED EMBODIMENTS

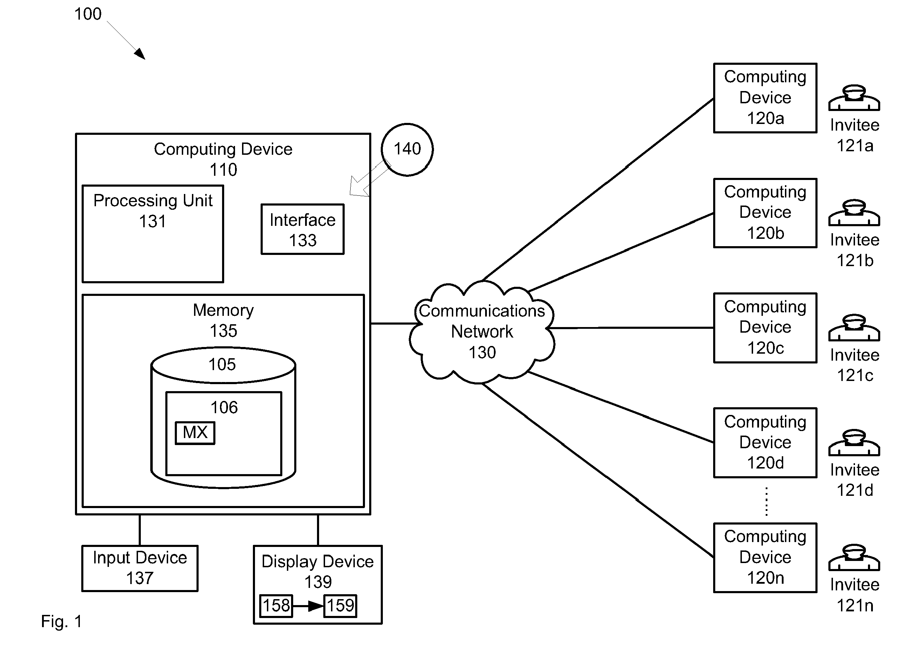

Figure 1 depicts a system 100 for updating a calendar database 105 storing event data 106 associated with an event. System 100 comprises a computing device 110 in communication with invitee computing devices 120a...120n (generically a invitee computing device 120, and collectively invitee computing device 120) via a suitable communication network 130. Each invitee computing device 120 can be associated with a respective invitee 121 to the event. In general, event data comprises a maximum number MX of attendees for the event.

Computing device 110 comprises a processing unit 131, a communications interface 133 and a memory 135 all in communication, for example via a computer bus (not depicted). Computing device 110 can further be in communication with an input device 137 and a display device 139. In some embodiments, computing device 110 can comprise input device 137 and display device 139.

In some embodiments, computing device 110 comprises and a calendar application 140 that can be stored in memory 135 and processed by processing unit 131.

Processing unit 131 comprises any suitable processing unit including but limited to a CPU (central processing unit). In general processing unit 131 is enabled to update calendar database 105, including updating event data 106. Processing unit 131 is further enabled to process data that is to be transmitted to invitee computing devices 120 and data received there from, via interface 133. In some embodiments, processing unit 131 is enabled to update calendar database 105 while processing calendar application 140.

Communications interface 133 is enabled to convey data between computing device 110 and invitee computing devices 120 via communications network 130. Accordingly, communications interface 133 is enabled to communicate via communications network 130 according to any suitable protocol compatible with communications network 130. Further, communications interface 133 is enabled to communicate in a wireless or wired manner, as desired, compatible with communications network 130, including but not limited to packet based protocols, Internet protocols, analog protocols, PSTN protocols, cell phone protocols (1X, UTMS, CDMA, GMS, and the like), WiFi protocols, WiMax protocols and/or a combination. Other suitable protocols are within the scope of present embodiments.

Similarly, communications network 130 can comprise any suitable combination of wired and/or wireless networks, including but not limited to packet based networks, the Internet, analog networks, the PSTN, LAN, WAN, cell phone networks, WiFi networks, WiMax networks and/or a combination. Other suitable types of communication networks are within the scope of present embodiments.

Memory device 135 can be any suitable combination of persistent memory, temporary memory, RAM, ROM and the like.

Input device 137 is generally enabled to receive input data, and can comprise any desired combination of suitable input devices, including but not limited to a keyboard, a pointing device, a mouse, a track wheel, a touchpad, a touch screen and the like. In alternative embodiments input data can be received at second computing device 120 via communications interface 133 and/or communications network 130, for example from other computing devices such as a central server (not depicted).

Display module 139 comprises circuitry 158 for generating a representation 159, for example a representation of calendar application 140. Display module 139 can include any suitable combination of CRT and/or flat panel displays (e.g. LCD, plasma and the like), and circuitry 158 can include any suitable combination of circuitry for controlling the CRT and/or flat panel displays etc., including but not limited to display buffers, transistors, electron beam controllers, LCD cells, plasmas cells, phosphors etc. In particular, display module 139 and circuitry 158 can be controlled by processing unit 122 to generate representation 159.

Invitee computing devices 120 can be similar to computing device 110, and though not depicted are understood to respectively comprise a processing unit, memory, communication interface etc.

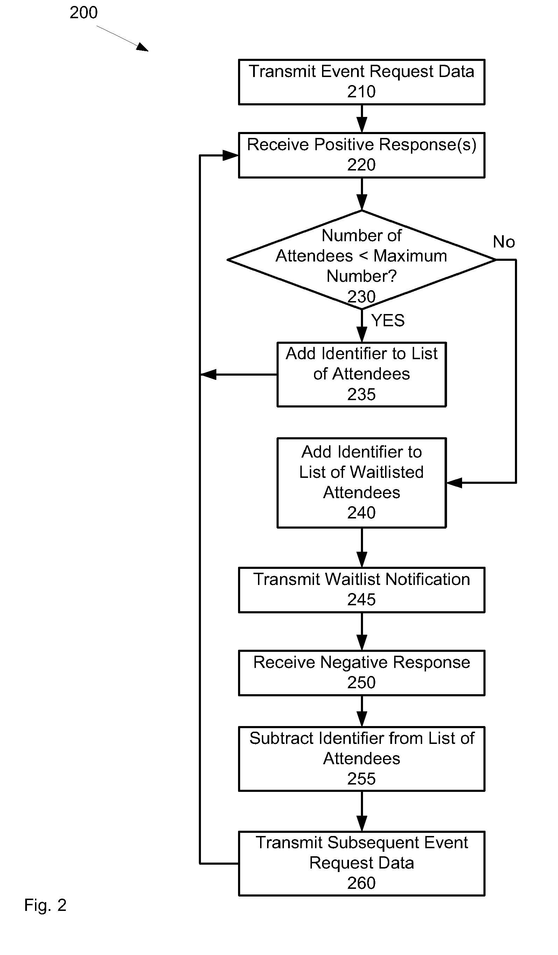

Attention is now directed to Figure 2 which depicts a method 200 for updating a calendar database storing event data associated with an event, the event data comprising a maximum number of attendees for the event. In order to assist in the explanation of the method 200, it will be assumed that the method 200 is performed using the system 100. Furthermore, the following discussion of the method 200 will lead to a further understanding of the system 100 and its various components. However, it is to be understood that the system 100 and/or the method 200 can be varied, and need not work exactly as discussed herein in conjunction with each other, and that such variations are within the scope of present embodiments.

Prior to discussing method 200, it is understood that event data 106 has been generated and stored in calendar database 106, and that maximum number MX of attendees has been stored in event data 106. In some embodiments, event data 106 can be generated automatically, for example via an automatic event scheduler (e.g. for periodic events etc.). In other embodiments, event data 106 can be generated upon receiving input from input device 137, for example when processing unit 131 is processing calendar application 140 and display device 139 is being controlled to display representation 159. In yet further embodiments, event data 106 can be generated by another computing device (e.g. a server) and transmitted to computing device 110 for storage and updating, via any suitable communications network, such as communications network 130.

Maximum number MX of attendees can be generated during and/or after event data 106 is being generated and/or stored. In some embodiments, maximum number MX can be received from input device 137. As event data 106 comprises maximum number MX, it is understood that there is a limitation on the number of attendees to the event. Furthermore, it is understood that the attendees to the event will be a subset of invitees 120. It is furthermore assumed that the number of invitees 120 is greater than maximum number MX.

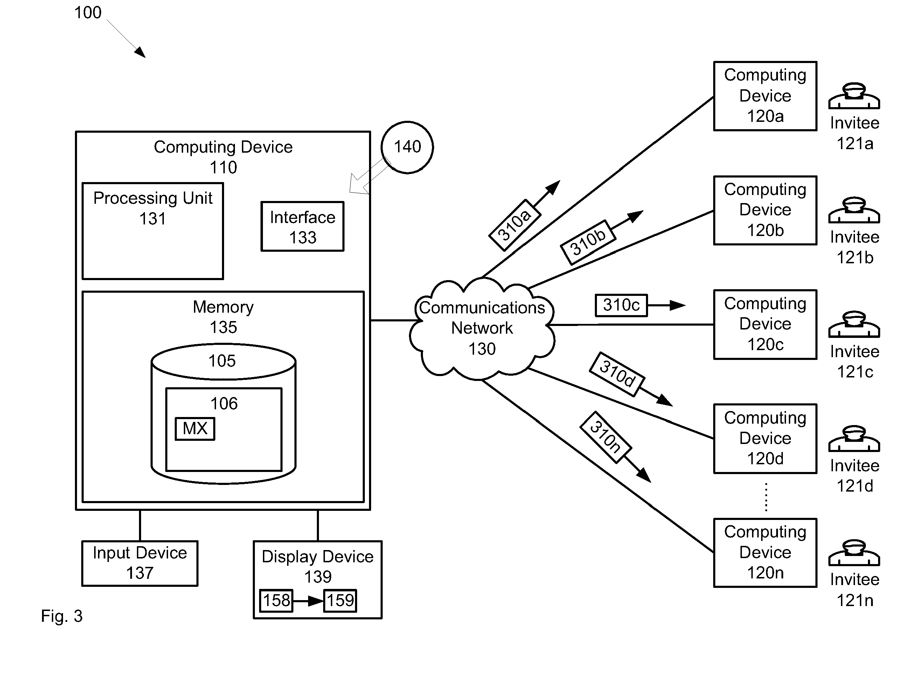

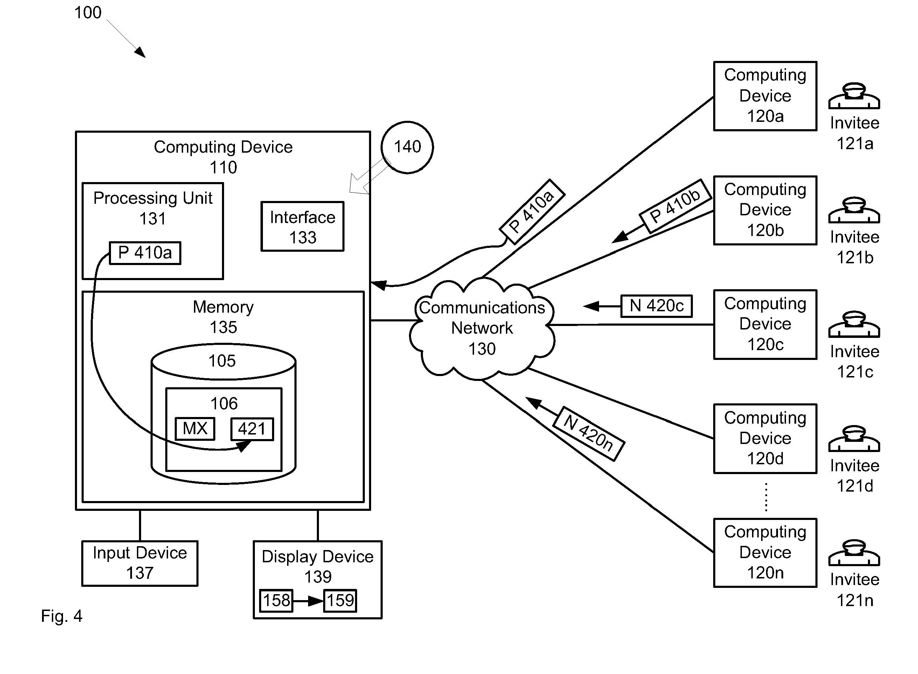

At step 210, event data request 310 is transmitted to invitee computing devices 120, as depicted in Figure 3 (substantially similar to Figure 1, with like elements having like numbers), in a one-to-one relationship with each invitee computing device 120. In general, each event request 310 comprises data indicative of a date/time of the event. Each event request 310 further comprises data for requesting a positive response 410 or a negative response 420 from invitee computing devices 120, as depicted in Figure 4; specifically, a positive response 410 comprises data indicating that a respective invitee 120 will attend the event, and a negative response 420 comprises data indicating that a respective invitee 120 will not attend the event.

In general it is understood that computing device 110 generates event requests 310, for example via processing unit 131, and that event requests 310 is transmitted via interface 133 and communications network 130. It is further understood that each event request 310 comprises a respective identifier of a respective invitee computing device 120, such that event requests 310 can be routed via communication network 130. In some embodiments, it is understood that calendar database 105 stores such identifiers. In other embodiments, it is understood that such identifiers can be determined by accessing an external calendar database.

It is further understood that each invitee computing device 120 is enabled to process a respective event request 310 and respond by transmitting at least one of a positive response 410 and negative response 420. In some embodiments, positive response and/or negative responses 420 can be generated automatically at respective invitee computing devices 120, for example by processing an event request 310 to extract a data indicative of the date/time of the event and comparing the date/time of the event with calendar data associated with a respective invitee 120, the calendar data stored at the respective computing device 120 and/or accessible by the respective computing device 120. In other embodiments, positive response and/or negative responses 420 can be generated upon receiving respective input data from an input device at respective computing devices 120. It is also understood that each positive response 410 and negative response 420 comprises an identifier of a respective invitee computing device 120; in some embodiments each positive response 410 and negative response 420 comprises an identifier of a respective invitee 120.

It is understood that a first subset of invitee computing device 120 can respond with positive responses 410 (e.g. respondent devices 120a, 120b in Figure 4), a second subset of invitee computing device 120 can respond with negative responses 420 (e.g. respondent devices 120c, 120n in Figure 4), and a third subset of invitee computing device 120 do not respond (e.g. respondent device 120d in Figure 4).

Hence, at step 220 positive responses 410 indicative that the event will be attended are received from at least a subset of invitee computing devices 120. It is understood that positive responses 410 arrive at computing device 110 in an order that can be generally dependent on each respective respondent device 120 and/or communication network 130. For example, in embodiments, where positive responses 410 are generated after receiving input data from an input device, some respondent devices 120 can receive such input within a short while (e.g. a few minutes) after receiving a respective event request 310; other respondent devices 120 can receive such input after a longer while (e.g. a few hours, days etc.) after receiving a respective event request 310.

For example, in Figure 4, positive response 410a is depicted as arriving at computing device 110 prior to positive response 410b.

In some embodiments, negative response 420 can be received. In these embodiments, event data 106 can be updated to indicate that an associated invitee is not attending the event.

At step 230, as each positive response 410 arrives at computing device 110 and is processed, the number of attendees to the event is determined and compared to maximum number MX. While the number of attendees the number of attendees less than maximum number MX event data 105 is updated at step 235, based on respective positive responses 410, to maintain a first list 421 of identifiers of attendees. In general, the number of attendees can be determined by processing list 421 and/or via counter of the number of attendees that can be stored in event data 106.

For example, when the first positive response 410a is received, event data 106 is updated, as in Figure 4, such that first list 421 of identifiers of attendees is generated and/or first populated (in some embodiments, list 421 can comprise an empty set until first positive response 420a is processed). Each identifier in list 421 can comprise a name etc. of each attendee (i.e. an invitee 120 associated with a respective invitee computing device 120 that generated a respective positive response 410) and/or an identifier of the respective computing device 120 a respective invitee computing device 120 that generated a respective positive response 410.

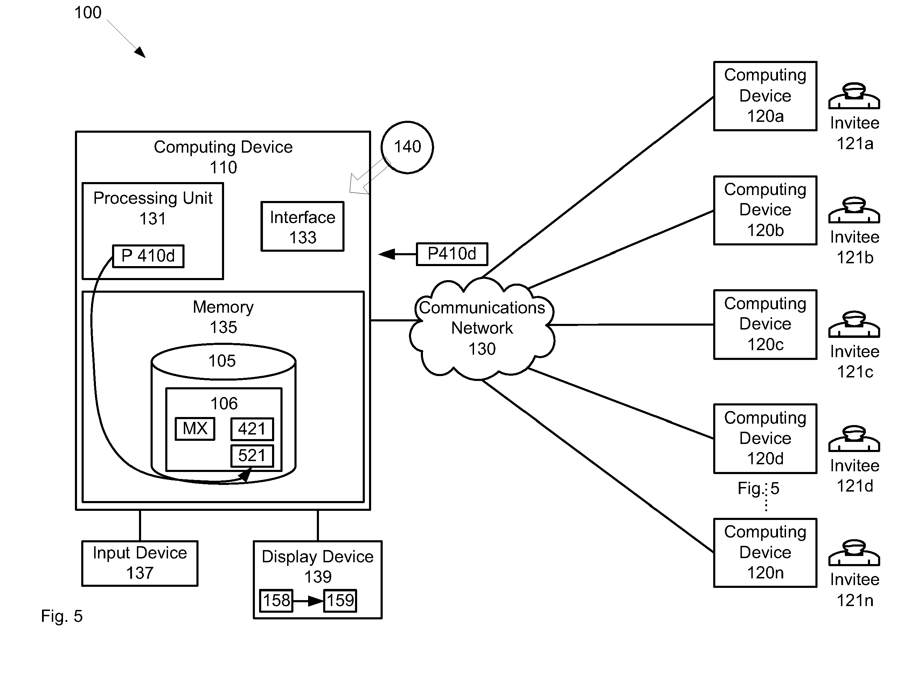

However, if can also be determined at step 230 that the number of attendees is equal to maximum number MX. In these embodiments, the event is now considered "closed" as the maximum number of attendees has been reached. However, positive responses 410 can continue to arrive at computing device 110. Hence if a subsequent positive response 410d (transmitted from invitee computing device 410d) is received subsequent to the number of attendees reaching maximum number MX, then event data 106 is updated based to maintain a second list 521 of identifiers of waitlisted attendees for the event, as depicted in Figure 5. List 521 can be maintained in manner similar that described above for list 421.

Hence, as each positive response 410 arrives it is determined whether maximum number MX of attendees has been reached. If not, then an identifier of an attendee (i.e. an invitee 121) is stored in list 421; if so, then an identifier of an invitee 121 is stored in list 521. Invitees 121 associated with identifiers in list 521 are understood to be waitlisted for the event.

For example, in some embodiments, list 421 can comprise Table 1, presuming that MX comprises 5 attendees:

| Event | Patent Committee |
|---|---|
| Time/Date | 13:00-17:00, February 11, 2009 |
| | Attendees |
| 1 | 120a |
| 2 | 120b |
| 3 | 120f |
| 4 | 120g |
| 5 | 120m |

Table 1

While Table 1 is arranged in rows and columns it is understood that list 421 can be in any suitable format and need not comprise rows and columns. Furthermore, Table 1 comprises an identifier of an "Event" entitled "Patent Committee". Table 1 further comprises an identifier of the "Time/Date" of the event, "13:00-17:00, February 11, 2009". Table 1 further comprises a column identifying the first five attendees associated with invitee computing devices 120 from which positive responses 410 were received, arranged in any suitable order: "120a", "120b", "120f", "120g" and "120m". In these embodiments, each attendee is identified by an identifier of a respective invitee computing device 120. It is understood that the identifier of each respective invitee computing device 120 in Table 1 can comprise any suitable identifier, such as a network address. In other embodiments, each attendee is identified by any other suitable identifier, such as a name of a respective attendee.

Similarly, in some embodiments, list 521 can comprise Table 2:

| Event | Patent Committee |
|---|---|
| Time/Date | 13:00-17:00, February 11, 2009 |
| | Waitlisted Invitee |
| 1 | 120d |
| 2 | 120 l |
| 3 | 120n |
| 4 | |
| 5 | |

Table 2

While Table 2 is arranged in rows and columns it is understood that list 521 can be in any suitable format and need not comprise rows and columns. Furthermore, Table 2 comprises an identifier of an "Event" entitled "Patent Committee". Table 2 further comprises an identifier of the "Time/Date" of the event, "13:00-17:00, February 11, 2009". Table 2 further comprises a column identifying the waitlisted invitees from which positive responses 410 were received after the number of attendees equalled maximum number MX, arranged in any suitable order: "120d", "120l", and "120n". Identifiers can be similar to identifiers in Table 1.

In some embodiments, list 521 can be organized by at least one of a time and date that positive responses 410 (such as subsequent positive response 410d) are received. In other embodiments, list 521 can be organized according to a priority of invitees 121 associated with invitee computing devices 120. For example invitees 121 identified on list 521 can be further identified with data representative of an organizational chart to (e.g. reporting structure, title, and the like), and invitees 121 having a higher position in the organizational chart can be assigned a higher priority.

At step 245, a waitlist notification 610 is transmitted to invitee computing device 120d, which is now associated with list 521via the identifier of respective invitee 121d (which can in turn be an identifier of invitee computing device 120d.) on list 521. In general, waitlist notification 610 is indicative that an associated invitee 121 is on a waiting list.

In some embodiments, when waitlist notification 610 is received at invitee computing device 120d, waitlist notification 610 can be processed to tentatively reserve the date/time of the event in a calendar database associated with invitee computing device 120d. In other embodiments, waitlist notification 610 is processed to control a display to device to provide an indication that the invitee 121d is on a waitlist for the event.

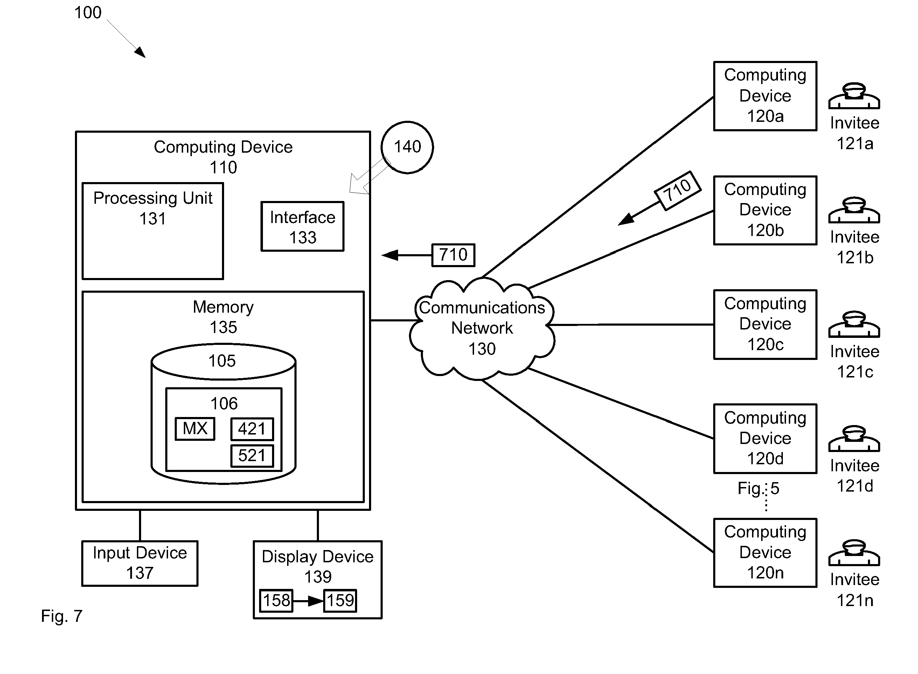

At step 250, a subsequent negative response 710 can be received from one of the subset of invitee computing devices 120 associated with list 421, as depicted in Figure 7. Subsequent negative response 710 indicative that the event will not be attended. In other words, negative response 710 is further indicative that one of the attendees originally understood to be attending the event, and identified on list 421, is now understood to be not attending the event. For example, in Figure 7, invitee computing device 120b transmits subsequent negative response 710.

Hence, at step 255, list 421 is updated, based on subsequent negative response 710, such that the number of attendees falls below maximum number MX. For example, the identifier of an associated attendee can be subtracted from list 421, as in Table 3, which comprises Table 1 with identifier "120b" removed and identifiers of attendees re-ordered in light of the removal of identifier "120b":

| Event | Patent Committee |
|---|---|
| Time/Date | 13:00-17:00, February 11, 2009 |
| | Attendees |
| 1 | 120a |
| 2 | 120f |
| 3 | 120g |
| 4 | 120m |
| 5 | |

Table 3

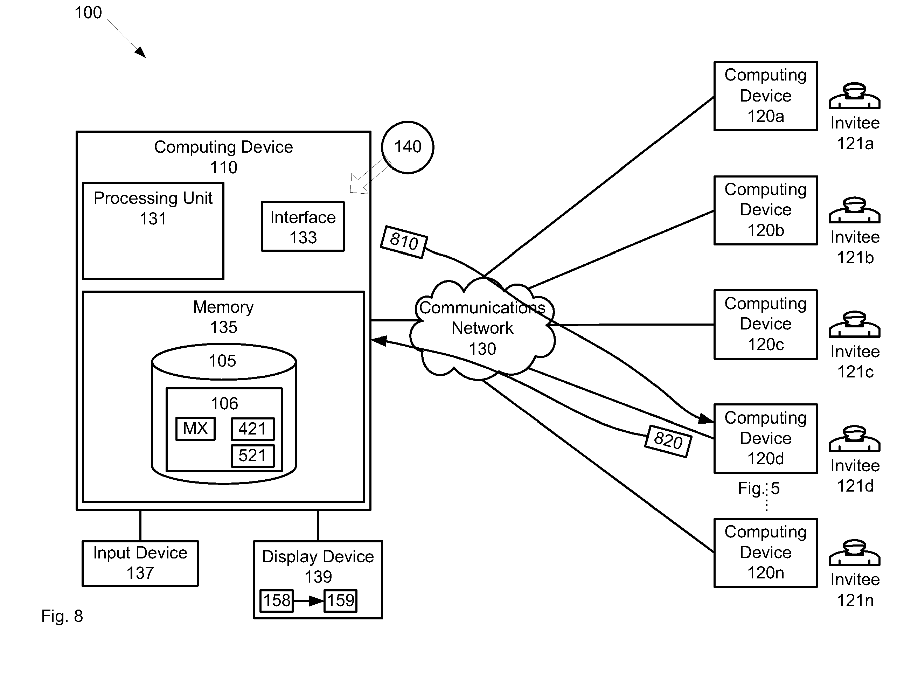

Hence, as the number of attendees is now less than the maximum number, another attendee can be added to the event, for example from invitees identified on list 521.Thus, at step 260, and as depicted in Figure 8, at least one subsequent event request 810 is transmitted to at least one invitee computing devices 810 associated with list 521. Each subsequent event request 810 is similar to event request 310 and comprises data for requesting a positive response 410 or a negative response 420 from a invitee computing devices 120 to which subsequent event request 810 was sent. For example, as depicted in Figure 8, subsequent event request 810 is transmitted to invitee computing device 120d, which is associated with the first invitee 121d identified on list 521 (i.e. via an identifier of invitee computing device 120d). However, subsequent event requests 810 can be transmitted to invitee computing devices 120 associated with list 521 in any suitable order.

For example, subsequent event requests 810 can be transmitted to invitee computing devices 120 in the order in which associated invitees 121 appear on list 521. In other embodiments, subsequent event requests 810 can be transmitted to invitee computing devices 120 in an order based on a priority assigned to each invitee 121 identified on list 521. For example, in some embodiments, each invitee 121 identified on list 521 can be further identified with data representative of an organizational chart to (e.g. reporting structure, title, and the like), and invitees 121 having a higher position in the organizational chart can be assigned a higher priority.

Furthermore, in some embodiments, subsequent event requests 810 can be transmitted in an order. In other embodiments, subsequent event requests 810 can be transmitted to invitee computing devices 120 associated with invitees 121 identified on list 521, and responses there from processed on a first come, first serve basis.

In any event, after step 260, steps 220-230 are repeated, however with further positive responses 820 received from invitee computing devices 810 associated with list 521, as also depicted in Figure 8. Each further positive response 810 comprises data indicative that event will be attended by an associated invitee 121. In some embodiments, a further negative response (not depicted) can be received. If so, either a new subsequent event request 810 is transmitted to a different invitee computing device 810 associated with list 521, and/or a computing device 110 waits for another further positive response 820.

In any event, as the number of attendees is now less than maximum number MX, step 235 is then repeated to update event data 106 based on further positive response 810, by moving attendee data from list 521 to list 421. If more further positive responses 810 (and/or positive responses 410 are received) at step 220, the number of attendees is maintained at less than or equal to maximum number MX, as described above.

In some alternative embodiments, event data 106 can comprise identifiers of key attendees to the event. For example, in some non-limiting embodiments, event data 106 can comprise Table 4, which identifies invitees 121 to the event, including but not limited to key invitees to the event:

| Event | Patent Committee | |
|---|---|---|
| Time/Date | 13:00-17:00, February 11, 2009 | |
| | Invitees | Key Invitees |
| 1 | 120a | K |
| 2 | 120b | K |
| 3 | 120c | |
| 4 | 120d | |
| 5 | 120e | |
| 6 | 120f | |
| 7 | 120g | |
| 8 | 1201 | |
| 9 | 120m | |
| 10 | 120n | |

Table 4

While Table 4 is arranged in rows and columns it is understood that Table 4 can be in any suitable format and need not comprise rows and columns. Furthermore, Table 4 comprises an identifier of an "Event" entitled "Patent Committee". Table 4 further comprises an identifier of the "Time/Date" of the event, "13:00-17:00, February 11, 2009". Table 4 further comprises a column identifying invitees 121 to the event, each invitee 121 via column "Invitees". In some embodiments, each invitee 121 can be identified by an identifier of a respective invitee computing device 120. It is understood that the identifier of each respective invitee computing device 120 in Table 4 can comprise any suitable identifier, such as a network address. In other embodiments, each invitee 121 is identified by any other suitable identifier, such as a name of a respective invitee 121. Table 4 further comprises a column "Key Invitees", which identifies the key invitees 121 listed in column "Invitees", in any suitable manner, for example by using a flag such as "K", however any suitable flag is within present embodiments. Hence, in Table 4 as provided, invitees 121 associated with invitee computing devices 120a, 120b are identified as key invitees 121. Invitees 121 that are not flagged are understood to be non-key invitees 121.

Key invitees 121 can be determined by receiving input data from input device 137 or in any other suitable manner. For example, in some embodiments, any invitee 121 at a given level in an organization chart can be automatically determined to be a key invitee 121 (e.g. all invited VPs (vice-presidents) must attend the event). In this manner, for example, key personnel and/or key decision makers for the event can be determined.

Further, it is understood that once a positive response 410 (and/or 810) is received from a key invitee 121, an identifier of key invitee 121 is stored at list 421, and key invitee 121 is now determined to be a key attendee. Similarly, an identifier of an invitee 121 is stored at list 421 who is a non-key invitee 121 is now determined to be a non-key attendee.

In any event, in some of these embodiments, if a number of key attendees identified on list 421 is less than a minimum number of key attendees within a given time period, it can be determined that the event is to be rescheduled. For example, if the event is two weeks from when event requests 310 are initially transmitted, it can be determined that if a number of key attendees do not positively respond within a given time period of 1 week, the event is to be rescheduled.

The event can be rescheduled in any suitable manner, for example by transmitting, to invitee computing devices 120, subsequent event requests for rescheduling the event. Subsequent event requests can be similar to event requests 310, however comprising a date/time of the rescheduled event, and data which enabled invitee computing devices 120 to determine that the original event has been rescheduled. Method 200 is then repeated.

In some of these embodiments, a minimum number of spaces on list 421 can be reserved for key attendees. For example, if maximum number is 5, then a minimum number can be 2 spaces (or any other suitable number) on list 421 that can be reserved for key attendees. Hence, in these embodiments, if the number of non-key attendees identified on list 421 equals a difference between the maximum number and the minimum number, and at least one subsequent positive response (such as positive response 410d) is received from invitee computing devices 120 associated with a non-key attendee, then the event data 106 is updated by updating list 521 rather than list 421. In other words, positive responses 410 received after the number of non-key attendees reaches 3 (i.e. difference between the maximum number and the minimum number, or 5-2=3), are placed on a wait list (i.e. list 521) to allow the minimum number of key invitees 121 to respond positively.

In further embodiments, event data 106 further comprises a minimum number of attendees for the even. If the minimum number of positive responses 410 (and/or 810) is not received within a given period (e.g. 1 week) the event can be rescheduled by transmitting, to the invitee computing devices 120, subsequent event request for rescheduling the event, as described above.

In some embodiments, some positive responses 410 can comprise data indicative that an invitee 121 will attend the event remotely, for example via a telephonic device and the like. In these embodiments, maximum number MX can be based on a maximum number of attendees who will physically attend the event (i.e. in person). For example, if a meeting room where the event will be held is physically constrained to an occupancy of maximum number MX, then attendees who attend the event remotely is need not be places on a waitlist (e.g. list 521).

In some embodiments, computing device 110 can comprise a server in communication with a computing devices associated with an inviter to the event. In these embodiments, method 200 is implemented in the server, which in turn communicates the contents of event data 106, list 421, list 521, etc. to the computing device associated with the inviter.

In general, by providing list 421 and list 521 in calendar database 105, computing resources at both computing device 110 and invitee computing devices 120 are used more efficiently. For example, list 421 and list 521 obviate the need for generation transmission and processing of cancellation notices if too many positive responses to an event request are received. Furthermore, list 421 and list 521 reduce the risk that the calendar database 105 will be accessed and updated inefficiently in order to process the cancellations and/or the calendar database 105 will be updated incorrectly. Furthermore, circuitry 158 for a display device 139 need not be updated repeatedly if each of the cancellations are formulated "manually" (e.g. via input received from an input device 137) leading to further inefficient use of computing resources at computing device 110.

Those skilled in the art will appreciate that in some embodiments, the functionality of computing device 110 and invitee computing devices 120 can be implemented using pre-programmed hardware or firmware elements (e.g., application specific integrated circuits (ASICs), electrically erasable programmable read-only memories (EEPROMs), etc.), or other related components. In other embodiments, the functionality of computing device 110 and invitee computing devices 120 can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Alternatively, the computer-readable program code could be stored remotely but transmittable to these components via a modem or other interface device connected to a network (including, without limitation, the Internet) over a transmission medium. The transmission medium can be either a non-wireless medium (e.g., optical and/or digital and/or analog communications lines) or a wireless medium (e.g., microwave, infrared, free-space optical or other transmission schemes) or a combination thereof.

A portion of the disclosure of this patent document contains material which is subject to copyright protection. The copyright owner has no objection to the facsimile reproduction by any one the patent document or patent disclosure, as it appears in the Patent and Trademark Office patent file or records, but otherwise reserves all copyrights whatsoever.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A method for updating a calendar database (105) storing event data (106) associated with an event, said event data (106) comprising identifiers of invitees to said event and a maximum number of attendees for said event, said method implemented in a computing device (110) in communication with said calendar database (105), said method comprising:
transmitting, to respective invitee computing devices (120), event request data requesting respective responses from said invitee computing devices (120), each said respective response comprising one of a positive response indicative that said event will be attended and a negative response indicative that said event will not be attended;
receiving, from at least a subset of said invitee computing devices (120), respective positive responses;
updating said event data (106), based on said positive responses, to maintain a first list (421) of identifiers of attendees; and
if a number of attendees equals said maximum number, and at least one subsequent positive response is received, then:
updating said event data (106), based on said at least one subsequent positive response, to maintain a second list (521) of identifiers of waitlisted invitees for said event; and
transmitting, to each one of said invitee computing devices (120) associated with said second list (521), a waiting-list notification indicative that an invitee associated with said one of said invitee computing devices (120) associated with said second list (521) is on a waiting list.

2. The method of claim 1, further comprising, if said second list (521) comprises at least one identifier, and if a subsequent negative response is received from at least one of said invitee computing devices (120) associated with said first list (421), then:
updating said first list (421) by removing a respective identifier of each of said at least one of said invitee computing devices (120) associated with said first list (421);
transmitting, to at least one of said invitee computing devices (120) associated with said second list (521), subsequent event request data inviting a further response;
receiving, from one of said at least one of said invitee computing devices (120) associated with said second list (521), a further positive response; and
updating said event data (106), based on said further positive response, by moving an identifier of said one of said at least one of said invitee computing devices (120) associated with said second list (521) from said second list (521) to said first list (421), whereby said number of attendees is maintained at less than or equal to said maximum number.

3. The method of claim 2, wherein an order in which said subsequent event request data is transmitted is based on an order of waitlisted invitees associated with said second list (521).

4. The method of claim 3, wherein said order of waitlisted invitees is based on at least one of: when respective subsequent positive responses were received from said invitee computing devices (120) associated with respective waitlisted invitees; and respective priorities of said waitlisted invitees.

5. The method of any of the preceding claims, wherein said event data (106) comprises identifiers of key invitees and a minimum number of key invitees, the method further comprising, if, at a predetermined time, a number of key invitees on said first list (421) is less than said minimum number of key invitees, transmitting, to said invitee computing devices (120), subsequent event request data for rescheduling said event.

6. The method of claim 5, wherein a minimum number of spaces on said first list (421) is reserved for said key invitees, the method comprising, if a number of attendees, on said first list (421), other than key invitees equals a difference between said maximum number and said minimum number, and if a subsequent positive response is received from an invitee computing device (110) associated with an additional invitee other than a key invitee, then:
updating said event data (106) by adding an identifier of said additional invitee to said second list (521); and
transmitting, to said invitee computing device (110) associated with said additional invitee, a waiting-list notification indicative that said additional invitee is on said waiting list.

7. The method of any of the preceding claims, wherein said event data (106) further comprises a minimum number of attendees for said event, the method further comprising, if, at a predetermined time, a number of accepted attendees is less than said minimum number of attendees, transmitting, to said invitee computing devices (120), subsequent event request data for rescheduling said event.

8. The method of any of the preceding claims, wherein said number of attendees is determined by at least one of processing said first list (421) and maintaining a counter of said number of attendees.

9. A computing device (110) for updating a calendar database (105) storing event data (106) associated with an event, said event data (106) comprising a maximum number of attendees for said event, said computing device (110) comprising:
a communication interface (133) enabled to communicate with respective invitee computing devices (120) associated with said invitees to said event, via a communication network;
memory device (135) enabled to store said calendar database (105); and
a processing unit (131) in communication with said communication interface (133) and said memory device (135), said processing unit (131) enabled to implement the method of any of claims 1 to 8.

10. A computer-readable medium storing computer-readable code, the computer-readable code being executable by a processor of a computing device (110) for causing said computing device (110) to implement the steps of the method of any of claims 1 to 8.

## Amended claims

### Amended claims in accordance with Rule 137(2) EPC.

**1.** A method for updating a calendar database (105) storing event data (106) associated with an event, said event data (106) comprising identifiers of invitees to said event and a maximum number of attendees for said event, said method implemented in a computing device (110) in communication with said calendar database (105), said (133) and a memory (135) all in communication, said method comprising:
transmitting via communication interface (133) and a communication network (130), to respective invitee computing devices (120), event request data requesting respective responses from said invitee computing devices (120), each said event will be attended and a negative response indicative that said event will not be attended:
receiving, from at least a subset of said invitee computing devices (120), respective positive responses;
updating said event data (106), based on said positive responses, to maintain a first list (421) of identifiers of attendees; and
determining if a number of attendees equals said maximum number, and at least one subsequent positive response is received, then :
updating said event data (106), based on said at least one subsequent positive response, to maintain a second list (521) of identifiers of waitlisted invitees for said event; and
transmitting, to each one of said invitee computing devices (120) associated with said second list (521), a waiting-list notification indicative that an invitee associated with said one of said invitee computing devices (120) associated with said second list (521) is on a waiting list.

**2.** The method of claim 1, further comprising, if said second list (521) comprises at least one identifier, and if a subsequent negative response is received from at least one of said invitee computing devices (120) associated with said list (421), then:
updating said list (421) by removing a respective identifier of each of said at least one of said invitee computing devices (120) associated with said first list
transmitting, to at least one of said invitee computing devices (120) associated with said second list (521), subsequent event request data inviting a further response;
receiving, from one of said at least one of said invitee computing devices (120) associated with said second list (521), a further positive response; and
updating said event data (106), based on said further positive response, by moving an identifier of said one of said at least one of said invitee computing devices (120) associated with said second list (521) from said second list (521) to said first list (421), whereby said number of attendees is maintained at less than or equal to said maximum number.

**3.** The method of claim 2, wherein an order in which said subsequent event request data is transmitted is based on an order of waitlisted invitees associated with said second list (521).

**4.** The method of claim 3, wherein said order of waitlisted invitees is based on at least one of: when respective subsequent positive responses were received from said invitee computing devices (120) associated with respective waitlisted invitees; and respective priorities of said waitlisted invitees.

**5.** The method of any of the preceding claims, wherein said event data (106) comprises identifiers of key invitees and a minimum number of key invitees, the method further comprising, if, at a predetermined time, a number of key invitees on said first list (421) is less than said minimum number of key invitees, transmitting, to said invitee computing devices (120), subsequent event request data for rescheduling said event.

**6.** The method of claim 5, wherein a minimum number of spaces on said first list (421) is reserved for said key invitees, the method comprising, if a number of attendees, on said first list (421), other than key invitees equals a difference between said maximum number and said minimum number, and if a subsequent positive response is received from an invitee computing device (110) associated with an additional invitee other than a key invitee, then:
updating said event data (106) by adding an identifier of said additional invitee to said second list (521); and
transmitting, to said invitee computing device (110) associated with said additional invitee, a waiting-list notification indicative that said additional invitee is on said waiting list.

**7.** The method of any of the preceding claims, wherein said event data (106) further comprises a minimum number of attendees for said event, the method further comprising, if, at a predetermined time, a number of accepted attendees is less than said minimum number of attendees, transmitting, to said invitee computing devices (120), subsequent event request data for rescheduling said event.

**8.** The method of any of the preceding claims, wherein said number of attendees is determined by at least one of processing said first list (421) and maintaining a counter of said number of attendees.

**9.** A computing device (110) for updating a calendar database (105) storing event data (106) associated with an event, said event data (106) comprising a maximum number of attendees for said event, said computing device (110) comprising:
a communication interface (133) enabled to communicate with respective invitee computing devices (120) associated with said invitees to said event, via a communication network;
memory device (135) enabled to store said calendar database (105); and
a processing unit (131) in communication with said communication interface (133) and said memory device (135), said processing unit (131) enabled to implement the method of any of claims 1 to 8.

**10.** A computer-readable medium storing computer-readable code, the computer-readable code being executable by a processor of a computing device (110) for causing said computing device (110) to implement the steps of the method of any of claims 1 to 8.

**1.** A method for updating a calendar database (105) storing event data (106) associated with an event, said event data (106) comprising identifiers of invitees to said event and a maximum number of attendees for said event, said method implemented in a computing device (110) in communication with said calendar database (105), said (133) and a memory (135) all in communication, said method comprising:
transmitting via communication interface (133) and a communication network (130), to respective invitee computing devices (120), event request data requesting respective responses from said invitee computing devices (120), each said respective response comprising one of a positive response indicative that said event will be attended and a negative response indicative that said will not be attended;
receiving, from at least a subset of said invitee computing devices (120), respective positive responses;
updating said event data (106), based on said positive responses, to maintain a first list (421) of identifiers of attendees;
as each positive response 410 arrives at computing device 110 and is processed,
determining a a number of attendees to said event and comparing said number of attendees to said maximum number, said number of attendees determined by at least one of processing said first list (421) and via a counter of said number of attendees stored in said event data; and
determining that a number of attendees equals said maximum number, and at least one subsequent positive response is received via said communication network then:
updating said event data (106) in said calendar database (105), based on said at least one subsequent positive response, to maintain a second list (521) of identifiers of waitlisted invitees for said event; and transmitting via said communication interface (133) and said communication network (130), to each one of said invitee computing devices (120) associated with said second list (521), a waiting-list notification indicative that an invitee associated with said one of said invitee computing device (120) associated with said second list (521) is on a waiting list.

**2.** The method of claim 1, further comprising, if said second list (521) comprises at least one identifier, and if a subsequent negative response is received from at least one of said invitee computing devices (120) associated with said first list (421), then;
updating said first list (421) by removing a respective identifier of each of said at least one of said invitee computing devices (120) associated with said first list (421);
transmitting, to at least one of said invitee computing devices (120) associated with said second list (521), subsequent event request data inviting a further response; receiving, from one of said at least one of said invitee computing devices (120) associated with said second list (521), a further positive response; and
updating said event data (106), based, on said further positive response, by moving an identifier of said one of said at least one of said invitee computing devices (120) associated with said second list (521) from said second list (521) to said first list (421), whereby said number of attendees is maintained at less than or equal to said maximum number.

**3.** The method of claim 2, wherein an order in which said subsequent event request data is transmitted is based on an order of waitlisted invitees associated with said second list (521).

**4.** The method of claim 3, wherein said order of waitlisted invitees is based on at least one of; when respective subsequent positive responses were received from said invitee computing devices (120) associated with respective waitlisted invitees; and respective priorities of said waitlisted invitees.

**5.** The method of any of the preceding claims, wherein, said event data (106) comprises identifiers of key invitees and a minimum number of key invitees, the method further comprising, if, at a predetermined time, a number of key invitees on said first list (421) is less than said minimum number of key invitees, transmitting, to said invitee computing devices (120), subsequent event request data for rescheduling said event.

**6.** The method of claim 5, wherein a minimum number of spaces on said first list (421) is reserved for said key invitees, the method comprising, if a number of attendees, on said first list (421), other than key invitees equals a difference between said maximum number and said minimum number, and if a subsequent positive response is received from an invitee computing device (110) associated with an additional invitee other than a key invitee, then;
updating said event data (106) by adding an identifier of said additional invitee to said second list (521); and
transmitting, to said invitee computing device (110) associated with said additional invitee, a waiting-list notification indicative that said additional invitee is on said waiting list.

**7.** The method of any of the preceding claims, wherein said event data (106) further comprises a minimum number of attendees for said event, the method further comprising, if, at a predetermined time, a number of accepted attendees is less than said minimum number of attendees, transmitting, to said invitee computing devices (120), subsequent event request data for rescheduling said event.

**8.** The method of any of the preceding claims, wherein said number of attendees is determined by at least one of processing said first list (421) and maintaining a counter of said number of attendees.

**9.** A computing device (110) for updating a calendar database (105) storing event data (106) associated with an event, said event data (106) comprising a maximum number of attendees for said event, said computing device (110) comprising:
a communication interface (133) enabled to communicate with respective invitee computing devices (120) associated with said invitees to said event, via a communication network;
memory device (135) enabled to store said calendar database (105); and
a processing unit (131) in communication with said communication interface (133) and said memory device (135), said processing unit (131) enabled to implement the method of any of claims 1 to 8.

**10.** A computer-readable medium storing computer-readable code, the computer-readable code being executable by a processor of a computing device (110) for causing said computing device (110) to implement the steps of the method of any of claims 1 to 8.
